# EUROPEAN PATENT SPECIFICATION

(11) **EP 1 771 912 B1**
(45) Date of publication and mention of the grant of the patent: **21.09.2011**
(21) Application number: 05746061.0
(22) Date of filing: 27.05.2005
(51) Int. Cl.: H01M 10/42, H01M 10/052, H01M 10/056, H01M 4/13, H01M 4/02

(54) **LITHIUM SECONDARY BATTERIES WITH CHARGE-CUTOFF VOLTAGES OVER 4.35 VOLT**
LITHIUM-SEKUNDÄRBATTERIE MIT LADUNGS-CUTOFF-SPANNUNGEN ÜBER 4,35 VOLT
ACCUMULATEUR AU LITHIUM PRESENTANT DES TENSIONS DE COUPURE DE CHARGE SUPERIEURES A 4,35 VOLT

(30) Priority: 28.05.2004 KR 2004038374; 30.12.2004 KR 2004116386
(43) Date of publication of application: 11.04.2007
(73) Proprietor: LG CHEMICAL LTD., Seoul 150-010 (KR)
(72) Inventor: KIM, Dong-Myung, Wolpyeong-dong, Seo-gu Daejeon 302-280 (KR); YOON, Jong-Moon, Yongdu-dong, Jung-gu Daejeon 301-110 (KR); KIM, Yong-Jeong, Jeonmin-dong, Yuseong-gu Daejeon 305-390 (KR); CHO, Benjamin 513-802, Samsung 5-cha Apartment,, Yongin-si, Gyeonggi-do 449-785 (KR); JEONG, Jun-Yong 107-408, Hanbat Garden Apartment, Chung-gu Daejeon 301-756 (KR); JEONG, Dae-June, Busan 617-060 (KR); BAE, Joon-Sung LG Chemical Development Corp.,, Daejeon 305-380 (KR)
(74) Representative: Schreiber, Ina
(86) International application number: PCT/KR2005/001556
(87) International publication number: WO 2005/117195

(56) References cited:
- EP-A- 1 189 299
- EP-A- 1 324 418
- WO-A-03/030293
- WO-A-2004/021502
- JP-A- 1 304 664
- JP-A- 2003 249 264
- KR-A- 20030 079 736
- US-A- 5 464 705
- US-A1- 2001 024 757
- US-A1- 2003 113 613
- US-A1- 2004 013 946

## Description

### Technical Field

The present invention relates to a lithium secondary battery having a charge-cutoff voltage of 4.35V or higher. More particularly, the present invention relates to a lithium secondary battery, which has a charge cut-off voltage of between 4.35V and 4.6V, high capacity, high output and improved safety and is provided with capacity balance suitable for a high-voltage battery by controlling the weight ratio (A/C) of both electrode active materials, i.e., weight ratio of anode active material (A) to cathode active material (C) per unit area of each electrode.

### Background Art

Recently, as electronic devices become smaller and lighter, batteries used therein as power sources are increasingly required to have a compact size and light weight. As rechargeable batteries with a compact size, light weight and high capacity, lithium secondary batteries such as secondary lithium ion batteries have been put to practical use and widely used in portable electronic and communication devices such as compact camcorders, portable phones, notebook PCs, etc.

A lithium secondary battery comprises a cathode, anode and an electrolyte. Lithium secondary batteries are classified into liquid electrolyte lithium secondary batteries using an electrolyte comprising a liquid organic solvent and lithium polymer batteries using an electrolyte comprising a polymer.

Although lithium having high electronegativity and high capacity per unit mass has been used as electrode active material for a lithium secondary battery, there is a problem in that lithium cannot ensure the stability of a battery by itself. Therefore, many attempts have been made to develop batteries using a material capable of lithium ion intercalation/deintercalation as electrode active material.

Cathode active materials that are currently used in lithium secondary batteries include lithium-containing transition metal composite oxides such as LiCoO₂, LiNiO₂, LiMn₂O₄, LiMnO₂ and LiFeO₂. Particularly, LiCoO₂ providing excellent electroconductivity, high voltage and excellent electrode characteristics is a typical example of commercially available cathode active materials. As anode active materials, carbonaceous materials capable of intercalation/deintercalation of lithium ions in an electrolyte are used. Additionally, polyethylene-based porous polymers are used as separators. A lithium secondary battery formed by using a cathode, anode and an electrolyte as described above permits repeated charge/discharge cycles, because lithium ions deintercalated from the cathode active material upon the first charge cycle serve to transfer energies while they reciprocate between both electrodes (for example, they are intercalated into carbon particles forming the anode active material and then deintercalated upon a discharge cycle).

In order to provide such lithium secondary batteries having high capacity, output and voltage, it is necessary to increase the theoretically available capacity of the cathode active material in a battery. To satisfy this, it is required that the charge-cutoff voltage of a battery is increased. Conventional batteries having a charge-cutoff voltage of 4.2V using LiCoO₂ among the above-described cathode active materials, utilize only about 55% of the theoretically available capacity of LiCoO₂ by intercalation/deintercalation processes. Therefore, selection of the anode active material in such batteries is limited so as to be conformed to the capacity of lithium ions to be deintercalated from the cathode. When such batteries are overcharged to a voltage of 4.35V or higher, the anode has no sites into which an excessive amount of lithium ions deintercalated from the cathode are intercalated. Therefore, lithium dendrite growth occurs, resulting in problems of rapid exothermic reactions and poor safety of the batteries. Additionally, side reactions between the cathode and electrolyte may occur to cause degradation of the cathode surface and oxidation of electrolyte.

European patent application EP 1 324 418 describes a high energy density rechargeable cell for medical device applications comprising LiCoO₂ cathode active material and having a weight ratio of anode active material to cathode active material from about 0.44 to about 0.74.

US patent application US 2004/0209156 describes a secondary lithium ion cell having a weight ratio of anode active material to cathode active material from 0.4 to 1.0.

### Brief Description of the Drawings

The foregoing and other objects, features and advantages of the present invention will become more apparent from the following detailed description when taken in conjunction with the accompanying drawings in which:
FIG. 1 is a graph showing variations in discharge capacity of the secondary lithium ion battery having a charge-cutoff voltage of 4.35V, obtained from Example 2;
FIG. 2 is a graph showing variations in discharge capacity of the secondary lithium ion battery having a charge-cutoff voltage of 4.2V, obtained from Comparative Example 1;
FIG. 3 is a graph showing the results of the overcharge test for the secondary lithium ion battery having a charge-cutoff voltage of 4.35V, obtained from Example 2;
FIG. 4 is a graph showing the results of the overcharge test for the secondary lithium ion battery having a charge-cutoff voltage of 4.2V, obtained from Comparative Example 1;
FIG. 5 is a graph showing high-temperature (45°C) cycle characteristics of each of the lithium secondary battery having a charge-cutoff voltage of 4.35V and using no additive for electrolyte according to Example 1, the lithium secondary battery having a charge-cutoff voltage of 4.35V and using cyclohexylbenzene (CHB) as additive for electrolyte according to Comparative Example 2 and the lithium secondary battery having a charge-cutoff voltage of 4.35V and using 4-fluorotoluene (para-FT) as additive for electrolyte according to Comparative Example 3;
FIG. 6 is a graph showing high-temperature (45°C) cycle characteristics of the lithium secondary battery having a charge-cutoff voltage of 4.35V and using 3-fluorotoluene (3-FT) as additive for electrolyte according to Example 5;
FIG. 7 is a graph showing the results of the hot box test for the lithium secondary battery having a charge-cutoff voltage of 4.35V and using CHB as additive for electrolyte according to Comparative Example 2;
FIG. 8 is a graph showing the results of the hot box test for the lithium secondary battery having a charge-cutoff voltage of 4.35V and using 4-fluorotoluene (para-FT) as additive for electrolyte according to Comparative Example 3;
FIG. 9 is a graph showing the results of the hot box test for the lithium secondary battery having a charge-cutoff voltage of 4.35V and using 3-fluorotoluene (3-FT) as additive for electrolyte according to Example 5;

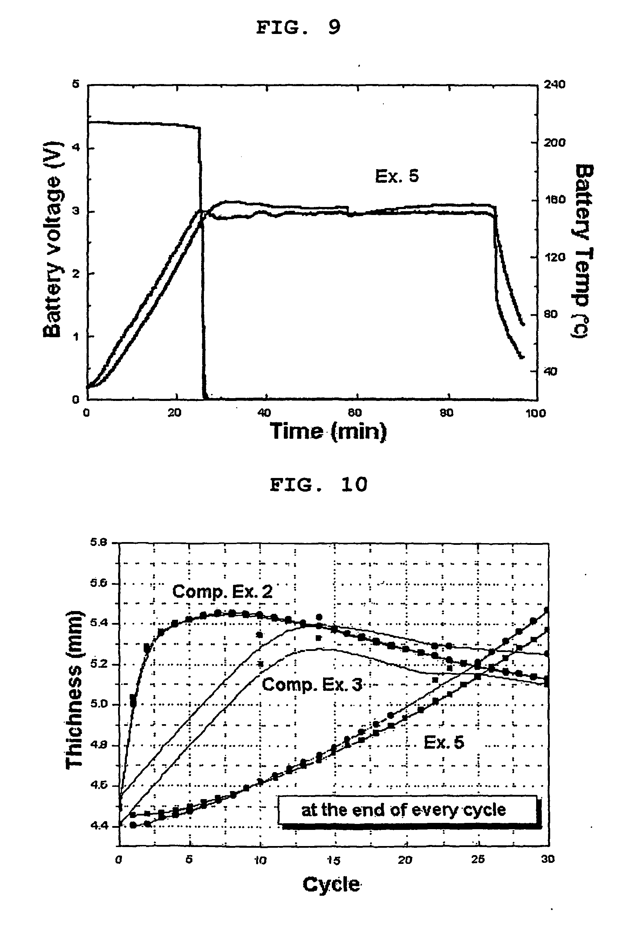

FIG. 10 is a graph showing the results of the high-temperature storage test (30 cycles: 80°C/3 hr + 25°C/7 hr) for each of the lithium secondary battery having a charge-cutoff voltage of 4.35V and using CHB as additive for electrolyte according to Comparative Example 2, the lithium secondary battery having a charge-cutoff voltage of 4.35V and using 4-fluorotoluene (para-FT) as additive for electrolyte according to Comparative Example 3 and the lithium secondary battery having a charge-cutoff voltage of 4.35V and using 3-fluorotoluene (3-FT) as additive for electrolyte according to Example 5; and
FIG. 11 is a graph showing the results of the high-temperature/short-term storage test (90°C/4 hr) for each of the lithium secondary battery having a charge-cutoff voltage of 4.35V and using no additive for electrolyte according to Example 1, the lithium secondary battery having a charge-cutoff voltage of 4.35V and using 3-fluorotoluene (3-FT) as additive for electrolyte according to Example 5 and the lithium secondary battery having a charge-cutoff voltage of 4.35V and using CHB as additive for electrolyte according to Comparative Example 2.

### Disclosure of the Invention

Therefore, the present invention has been made in view of the above-mentioned problems occurring in manufacturing a high-capacity battery having charge-cutoff voltages over 4.35V. We have found that when the weight ratio (A/C) of anode active material (A) to cathode active material (C) per unit area of each electrode is controlled to an optimized condition, it is possible to ensure a plurality of sites into which an excessive amount of lithium ions deintercalated from a cathode can be intercalated. We have also found that it is possible to reduce side reactions between a cathode and electrolyte by controlling the particle diameter (particle size) of a cathode active material, and thus to improve the safety of a high-voltage battery.

Therefore, it is an object of the present invention to provide a high-capacity lithium secondary battery that has a charge-cutoff voltage of between 4.35V and 4.6V and is stable even under overcharge conditions.

According to an aspect of the present invention, there is provided a lithium secondary battery comprising the features of claim 1.

Hereinafter, the present invention will be explained in more detail.

According to the present invention, the high-voltage lithium secondary battery showing charge-cutoff voltages over 4.35V, for example a high-output lithium secondary battery showing a charge-cutoff voltage of between 4.35V and 4.6V is characterized in that whose capacity balance is satisfied by controlling the weight ratio (A/C) of anode active material (A) to cathode active material (C) per unit area of each electrode.

The present invention characterized by the above-mentioned weight ratio provides the following effects.
(1) The high-voltage battery having a charge-cutoff voltage of 4.35V or higher according to the present invention can show improved safety as well as higher capacity, voltage and output compared to conventional batteries having a charge-cutoff voltage of 4.2V.

Japanese Laid-Open Patent No. 2001-68168 discloses a high-voltage battery having a charge cut-off voltage of 4.35V or higher, wherein the battery uses a cathode active material doped with transition metals or non-transition metals such as Ge, Ti, Zr, Y and Si so as to show such high voltage. When the battery is charged to a voltage higher than 4.35V, a great amount of lithium ions are deintercalated from the cathode. However, the anode has no sites into which such excessive amount of lithium ions can be intercalated, resulting in a rapid drop in battery safety.

On the contrary, the lithium secondary battery according to the present invention is designed so that capacity balance can be satisfied by the presence of multiple anode sites, into which an excessive amount of lithium ions deintercalated from the cathode while the battery is charged to a voltage of 4.35V or higher, obtained by controlling the weight ratio (A/C) of anode active material (A) to cathode active material (C) per unit area of each electrode. Therefore, the lithium secondary battery according to the present invention not only can provide high capacity and high output but also can solve the safety-related problem occurring in the high-voltage battery according to the prior art.
(2) Additionally, the lithium secondary battery according to the present invention can prevent side reactions between the cathode active material and electrolyte, which may occur under overcharge conditions (over 4.35V), by controlling the particle diameter (size) of cathode active material, and thus prevent a drop in battery safety.

In other words, as the specific surface area of a cathode active material increases, side reactions between a cathode active material and electrolyte increase. Therefore, the lithium secondary battery according to the present invention uses a cathode active material with a particle size greater than that of a currently used cathode active material so as to reduce the specific surface area of the cathode active material. Additionally, in order to prevent loss in reaction kinetics in the battery caused by the use of the cathode active material having such a large particle diameter, it is possible to control the loading amount of each electrode active material per unit area in the cathode and anode, and thus to realize improvement in battery safety.
(3) Further, the lithium secondary battery according to the present invention can significantly increase the available capacity and average discharge voltage of a battery, even when using a lithium cobalt-based cathode active material such as LiCoO₂ that provides only about 55% of its theoretically available capacity by intercalation/deintercalation processes in a conventional battery having a charge-cutoff voltage of 4.2V. In fact, the following experimental examples show that although the lithium secondary battery according to the present invention uses LiCoO₂ in the same manner as a conventional battery, the battery provides an available capacity of LiCoO₂ increased by at least 14% (see, Table 1).

According to the present invention, the range of charge-cutoff voltages of the lithium secondary battery may be controlled in order to provide a high voltage and output of 4.35V or higher. Otherwise, the cathode active material used in the battery may be doped or substituted with another element, or may be surface-treated with a chemically stable substance.

More particularly, the lithium secondary battery according to the present invention has a charge-cutoff voltage of 4.35V or higher, preferably of between 4.35V and 4.6V. When the battery has a charge-cutoff voltage of lower than 4.35V, it is substantially the same as a conventional 4.2V battery and does not show an increase in the available capacity of a cathode active material so that a high-capacity battery cannot be designed and obtained. Additionally, when the battery has a charge-cutoff voltage of higher than 4.6V, the cathode active material used in the battery may experience a rapid change in structure due to the presence of the H13 phase generated in the cathode active material. In this case, there are problems in that transition metal is dissolved out of a lithium transition metal composite oxide used as cathode active material and oxygen loss may occur. Further, as the charge-cutoff voltage increases, reactivity between the cathode and electrolyte also increases, resulting in problems including explosion of the battery.

The anode active material that may be used in the high-voltage lithium secondary battery having charge-cutoff voltages over 4.35V according to the present invention includes conventional anode active materials known to one skilled in the art (for example, materials capable of lithium ion intercalation/ deintercalation). There is no particular limitation in selection of the anode active material. Non-limiting examples of the anode active material include lithium alloys, carbonaceous materials, inorganic oxides, inorganic chalcogenides, nitrides, metal complexes or organic polymer compounds. Particularly preferred are amorphous or crystalline carbonaceous materials.

The cathode active material that may be used in the high-voltage lithium secondary battery having charge-cutoff voltages over 4.35V according to the present invention includes conventional cathode active materials known to one skilled in the art (for example, lithium-containing composite oxides having at least one element selected from the group consisting of alkali metals, alkaline earth metals, Group 13 elements, Group 14 elements, Group 15 elements, transition metals and rare earth elements). There is no particular limitation in selection of the cathode active material. Non-limiting examples of the cathode active material include various types of lithium transition metal composite oxides (for example, lithium manganese composite oxides such as LiMn₂O₄; lithium nickel oxides such as LiNiO₂; lithium cobalt oxides such as LiCoO₂; lithium iron oxides; the above-described oxides in which manganese, nickel, cobalt or iron is partially doped or substituted with other transition metals or non-transition metals (for example, Al, Mg, Zr, Fe, Zn, Ga, Si, Ge or combinations thereof); lithium-containing vanadium oxides; and chalcogenides (for example, manganese dioxide, titanium disulfide, molybdenum disulfide, etc.).

As cathode active material, lithium cobalt composite oxides optionally doped with Al, Mg, Zr, Fe, Zn, Ga, Sn, Si and/or Ge are preferable and LiCoO₂ is more preferable. Even if LiCoO₂ is used as cathode active material in the same manner as conventional batteries, the lithium secondary battery according to the present invention can provide an increase in available capacity of the cathode active material and thus can be a high-voltage battery due to a suitable design in electrodes.

In the high-voltage battery having a charge-cutoff voltage of 4.35V or higher according to the present invention, the weight ratio (A/C) of anode active material (A) to cathode active material (C) per unit area of each electrode ranges suitably from 0.44 to 0.70 and more preferably from 0.5 to 0.64. When the weight ratio is less than 0.44, the battery is substantially the same as a conventional 4.2V-battery. Therefore, when the battery is overcharged to 4.35V or higher, the capacity balance may be broken to cause dendrite growth on the surface of anode, resulting in short-circuit in the battery and a rapid drop in the battery capacity. When the weight ratio is greater than 0.64, an excessive amount of lithium sites exists undesirably in the anode, resulting in a drop in energy density per unit volume/mass of the battery.

According to the present invention, such controlled weight ratio of anode active material to cathode active material per unit area of each electrode can be obtained preferably by using LiCoO₂, LiNiMnCoO₂ or LiNiMnO₂ having a capacity similar to that of LiCoO₂, etc., as cathode active material and using graphite as anode active material. When high-capacity cathode materials such as Ni-containing materials and/or high-capacity anode materials such as Si are used, it is possible to design and manufacture an optimized lithium secondary battery having high capacity, high output and improved safety through recalculation of the weight ratio considering a different capacity. However, the scope of the present invention is not limited to the above-mentioned cathode active materials and anode active materials.

The cathode active materials used in the lithium secondary battery according to the present invention (for example, LiCoO₂) have a problem in that they are deteriorated in terms of thermal properties when being charged to 4.35V or higher. To prevent the problem, it is possible to control the specific surface area of the cathode active material.

As the particle size of the cathode active material increases (in other words, as the specific surface area of the cathode active material decreases), reactivity between the cathode active material and electrolyte may decrease, resulting in improvement in thermal stability. For this reason, it is preferable to use a cathode active material having a particle diameter larger than that of a currently used cathode active material. Therefore, the cathode active material used in the battery according to the present invention preferably has a particle diameter (particle size) of between 5 and 30 µm. When the cathode active material has a particle diameter of less than 5 µm, side reactions between the cathode and electrolyte increase to cause the problem of poor safety of the battery. When the cathode active material has a particle diameter of greater than 30 µm, reaction kinetics may be slow in the battery.

Additionally, in order to prevent the degradation of reaction kinetics in the whole battery, caused by the use of a cathode active material having a particle diameter greater than that of a currently used cathode active material, it is possible to control the loading amount of cathode active material and anode active material per unit area of each electrode.

It is preferable that the loading amount of cathode active material per unit area of cathode ranges from 10 to 30 mg/cm². When the loading amount of cathode active material is less than 10 mg/cm², the battery may be degraded in terms of capacity and efficiency. When the loading amount of cathode active material is greater than 30 mg/cm², thickness of the cathode increases, resulting in degradation of reaction kinetics in the battery. Additionally, it is preferable that the loading amount of anode active material per unit area of anode ranges from 4.4 to 21 mg/cm². When the loading amount of anode active material is less than 4.4 mg/cm², capacity balance cannot be maintained, thereby causing degradation in battery safety. When the loading amount of anode active material is greater than 21 mg/cm², an excessive amount of lithium sites is present undesirably in the anode, resulting in a drop in energy density per unit volume/mass of the battery.

The electrode used in the battery according to the present invention can be manufactured by a conventional process known to one skilled in the art. In one embodiment, slurry for each electrode is applied onto a current collector formed of metal foil, followed by rolling and drying.

Slurry for each electrode, i.e., slurry for a cathode and anode may be obtained by mixing the above-described cathode active material/anode active material with a binder and dispersion medium. Each of the slurry for a cathode and anode preferably contains a small amount of conductive agent.

There is no particular limitation in the conductive agent, as long as the conductive agent is an electroconductive material that experiences no chemical change in the battery using the same.. Particular examples of the conductive agent that may be used include carbon black such as acetylene black, ketchen black, furnace black or thermal black; natural graphite, artificial graphite and conductive carbon fiber, etc., carbon black, graphite powder or carbon fiber being preferred.

The binder that may be used includes thermoplastic resins, thermosetting resins or combinations thereof. Among such resins, polyvinylidene difluoride (PVdF), styrene butadiene rubber (SBR) or polytetrafluoroethylene (PTFE) is preferable, PVdF being more preferable.

The dispersion medium that may be used includes aqueous dispersion media or organic dispersion media such as N-methyl-2-pyrollidone.

In both electrodes of the lithium secondary battery according to the present invention, the ratio (A/C) of the thickness of cathode (C) to that of anode (A) suitably ranges from 0.7 to 1.4, preferably from 0.8 to 1.2. When the thickness ratio is less than 0.7, loss of energy density per unit volume of the battery may occur. When the thickness ratio is greater than 1.4, reaction kinetics may be slow in the whole battery.

The high-voltage lithium secondary battery having charge-cutoff voltages over 4.35V or higher according to the present invention includes a cathode (C), an anode (A), a separator interposed between both electrodes and an electrolyte, wherein the cathode(C) and anode(A) are obtained by controlling the weight ratio (A/C) of anode active material to cathode active material per unit area of each electrode to 0.44-0.70.

The high-voltage lithium secondary battery having a charge-cutoff voltage of 4.35V or higher is also characterized by using an electrolyte that further comprises a compound having a reaction potential of 4.7V or higher in addition to a currently used electrolyte for batteries.

Due to the presence of the above characteristic electrolyte, it is possible to improve the safety and high-temperature storage characteristics of a high-voltage lithium secondary battery having a charge-cutoff voltage of 4.35V or higher.
(1) When cyclohexylbenzene (CHB) or biphenyl (BP), currently used as additives for electrolyte in conventional batteries having a charge-cutoff voltage of 4.2V or higher, are used in order to improve the safety and high-temperature storage characteristics of a high-voltage lithium secondary battery having a charge-cutoff voltage of 4.35V or higher, cycle characteristics of the battery at room temperature and high temperature are degraded rapidly. Additionally, because a large amount of the above additives are decomposed under high-temperature storage conditions, a very thick insulator film is formed on a cathode to prevent lithium ions from moving in the battery, so that recovery capacity of the battery cannot be obtained.

On the contrary, the battery according to the present invention uses fluorotoluene (FT) compounds having a reaction potential of 4.7V or higher (for example, 2-fluorotoluene (2-FT) and/or 3-fluorotoluene (3-FT)) as additives for electrolyte. Because such additives have high reaction potentials and experience little change in reaction potentials during repeated cycles, it is possible to prevent degradation of battery quality caused by decomposition of an additive at a voltage of between 4.35V and 4.6V and a rapid change in reaction potentials, and to improve high-temperature storage characteristics of a battery.
(2) When such additives for electrolyte are used, it is possible to reduce a contact surface where side reactions between a cathode and electrolyte may occur in case of the battery containing only conventional electrolyte, and thus to improve battery safety.

The additive is 2-fluorotoluene (2-FT) and/or 3-fluorotoluene (3-FT) because they have high reaction potentials and experience little change in reaction potentials during repeated cycles.

Because 2-fluorotoluene and/or 3-fluorotoluene are physically stable and have such a high boiling point as to prevent thermal decomposition as well as a high reaction potential of 4.7V or higher (the reaction potential being higher than the reaction potential of CHB or BP by about 0.1V), they can improve high-temperature storage characteristics and safety of a battery using an electrolyte comprising them as additives, contrary to conventional additives such as CHP and BP. Additionally, because they experience little change in reaction potentials during repeated cycles, as compared to conventional fluorotoluene compounds, they can prevent degradation in cycle characteristics of a high-voltage battery.

In fact, when a fluorotoluene compound other than 2-fluorotoluene and 3-fluorotoluene, or 4-fluorotolune (4-FT) having a reaction potential similar to that of CHB is used, a battery having a charge-cutoff voltage of 4.35V or higher shows significant degradation in cycle characteristics during repeated cycles due to a reaction of a cathode active material with a fluorine atom substituted in the para-position. Therefore, it is not possible to improve the safety and high-temperature storage characteristics of a battery.

Preferably, the compound having a reaction potential of 4.7V or higher ( 2-FT and/or 3-FT) is added to an electrolyte in an amount of between 0.1 and 10 wt% based on 100 wt% of the total weight of electrolyte. When the compound is used in an amount of less than 0.1 wt%, it is not possible to improve the safety and quality of a battery significantly. When the compound is used in an amount of greater than 10 wt%, there are problems in that viscosity of the electrolyte decreases and the additive causes an exothermic reaction to emit heat excessively.

The high-voltage battery having a voltage of 4.35V or higher according to the present invention can be manufactured by a conventional process known to one skilled in the art. In one embodiment, a cathode and anode are provided with a separator interposed between both electrodes and an electrolyte is introduced, wherein the cathode (C) and anode (A) are obtained by controlling the weight ratio (A/C) of anode active material to cathode active material per unit area of each electrode to 0.44-0.70.

The electrolyte that may be used in the present invention includes a salt represented by the formula of A⁺B⁻, wherein A⁺ represents an alkali metal cation selected from the group consisting of Li⁺, Na⁺, K⁺ and combinations thereof, and B⁻ represents an anion selected from the group consisting of PF₆⁻, BF4⁻, Cl⁻, Br⁻, I⁻, ClO₄⁻, AsF₆⁻, CH₃CO₂⁻, CF₃SO₃⁻, N(CF₃SO₂)₂⁻, C(CF₂SO₂)₃⁻ and combinations thereof, the salt being dissolved or dissociated in an organic solvent selected from the group consisting of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethylmethyl carbonate (EMC), gamma-butyrolactone (y-butyrolactone) and mixtures thereof. However, the electrolyte that may be used in the present invention is not limited to the above examples. Particularly, when an electrolyte comprising a compound having a reaction potential of 4.7V or higher (for example, 2-fluorotoluene and/or 3-fluorotoluene) is used, it is possible to improve high-temperature storage characteristics and safety with no degradation in cycle characteristics of the high-voltage battery.

Although there is no particular limitation in the separator that may be used in the present invention, porous separators may be used. Particular examples of porous separators include polypropylene-based, polyethylene-based and polyolefin-based porous separators.

There is no particular limitation in the shape of the lithium secondary battery according to the present invention. The lithium secondary battery may be a cylindrical, prismatic, pouch-type or a coin-type battery.

Additionally, according to another aspect of the present invention, there is provided a lithium secondary battery that includes a cathode, an anode, a separator and an electrolyte, wherein the battery has a charge-cutoff voltage of between 4.35V and 4.6V, and the electrolyte comprises a compound having a reaction potential of 4.7V or higher.

In the lithium secondary battery, the compound having a reaction potential of 4.7V or higher is the same as defined above.

### Best Mode for Carrying Out the Invention

Reference will now be made in detail to the preferred embodiments of the present invention. It is to be understood that the following examples are illustrative only and the present invention is not limited thereto.

### [Examples 1-5. Manufacture of batteries having charge-cutoff voltage over 4.35V]

### Example 1 to 4 do not form part of the invention but represent background art that is useful for understanding the invention. Example 1. Lithium secondary battery having charge-cutoff voltage of 4.35V (1)

### (Manufacture of cathode)

95 wt% of LiCoO₂ having a particle diameter of 10 µm, 2.5 wt% of a conductive agent and 2.5 wt% of a binder were mixed to form slurry. The slurry was applied uniformly on both surfaces of aluminum foil having a thickness of 15 µm, followed by rolling, to provide a cathode having an active material weight of 19.44 mg/cm². The finished cathode had a thickness of 128 µm.

### (Manufacture of anode)

To 95.3 wt% of graphite, 4.0 wt% of a binder and 0.7 wt% of a conductive agent were added and mixed to form slurry. The slurry was applied uniformly on both surfaces of copper foil having a thickness of 10 µm, followed by rolling, to provide an anode having an active material weight of 9.56 mg/cm². The weight ratio (A/C) of the anode active material to cathode active material per unit area of each electrode was 0.49, and the finished anode had a thickness of 130 µm.

### (Preparation of electrolyte)

To a solution containing ethylene carbonate and dimethyl carbonate in a volume ratio of 1:2 (EC:DMC), 1M LiPF₆ was dissolved to provide an electrolyte.

### (Manufacture of battery)

The cathode and anode obtained as described above were used to provide a coin-type battery and prismatic battery. The manufacturing process of each battery was performed in a dry room or glove box in order to prevent the materials from contacting with the air.

### Example 2. Lithium secondary battery having charge-cutoff voltage of 4.35V (2)

Example 1 was repeated to provide a lithium secondary battery, except that a cathode (C) having an active material weight of 22 mg/cm² and an anode having an active material weight of 11 mg/cm² were used to adjust the weight ratio (A/C) of the anode active material to cathode active material per unit area of each electrode to 0.50.

### Example 3. Lithium secondary battery having charge-cutoff voltage of 4.4V

Example 1 was repeated to provide a lithium secondary battery having a charge-cutoff voltage of 4.4V, except that a cathode (C) having an active material weight of 22 mg/cm² and an anode having an active material weight of 11.66 mg/cm² were used to adjust the weight ratio (A/C) of the anode active material to cathode active material per unit area of each electrode to 0.53.

### Example 4. Lithium secondary battery having charge-cutoff voltage of 4.5V

Example 1 was repeated to provide a lithium secondary battery having a charge-cutoff voltage of 4.5V, except that a cathode (C) having an active material weight of 22 mg/cm² and an anode having an active material weight of 12.57 mg/cm² were used to adjust the weight ratio (A/C) of the anode active material to cathode active material per unit area of each electrode to 0.57.

### Example 5. Lithium secondary battery having charge-cutoff voltage of 4.35V

Example 1 was repeated to provide a lithium secondary battery, except that 3 wt% of 3-fluorotoluene (3-FT) was added to 100 wt% of the electrolyte containing 1M LiPF₆ dissolved in a mixed solvent of ethylene carbonate and dimethyl carbonate (volume ratio= 1:2 (EC:DMC)).

**[Table 1]**

| Sample | Charge Cut-off Voltage (V) | Weight Ratio (A/C) of Each Electrode Active Material per Unit Area of Anode (A) to Cathode (C) | Additive for Electrolyte (based on 100 wt% of electrolyte) |
|---|---|---|---|
| Ex. 1 | 4.35 | 0.49 | - |
| Ex. 2 | 4.35 | 0.50 | - |
| Ex. 3 | 4.4 | 0.53 | - |
| Ex. 4 | 4.5 | 0.57 | - |
| Ex. 5 | 4.35 | 0.49 | 3-FT (3 wt%) |
| Comp. Ex. 1 | 4.2 | 0.44 | - |
| Comp. Ex. 2 | 4.35 | 0.49 | CHB (3 wt%) |
| Comp. Ex. 3 | 4.35 | 0.49 | 4-FT (3 wt%) |
| Comp. Ex. 4 | 4.2 | 0.44 | CHB (3 wt%) |

### [Comparative Examples 1-4]

### Comparative Example 1. Manufacture of lithium secondary battery having charge-cutoff voltage of 4.2V

Example 1 was repeated to provide a lithium secondary battery, except that a cathode (C) having an active material weight of 22 mg/cm² and an anode having an active material weight of 9.68 mg/cm² were used to adjust the weight ratio (A/C) of the anode active material to cathode active material per unit area of each electrode to 0.44, as described in the above Table 1.

### Comparative Example 2

Example 1 was repeated to provide a lithium secondary battery, except that 3 wt% of cyclohexyl benzene (CHB) was added to the electrolyte.

### Comparative Example 3

Example 1 was repeated to provide a lithium secondary battery, except that 3 wt% of 4-fluorotoluene (para-FT) was added to the electrolyte instead of 3-fluorotoluene.

### Comparative Example 4

Example 1 was repeated to provide a lithium secondary battery, except that the weight ratio (A/C) of the anode active material to cathode active material per unit area of each electrode was adjusted to 0.44 and 3 wt% of cyclohexyl benzene (CHB) was added to the electrolyte.

### Experimental Example 1. Evaluation for high-voltage battery having charge-cutoff voltages over 4.35V vs. battery having charge-cutoff voltage of 4.2V

### 1-1. Evaluation of charge/discharge capacity

The following experiment was carried out to compare the charge/discharge capacity of the lithium secondary battery having a charge-cutoff voltage of 4.35V or higher according to the present invention with that of the lithium secondary battery having a charge-cutoff voltage of 4.2V.

The batteries according to examples 2-4 were used as samples for batteries having charge-cutoff voltages over 4.35V and the battery according to Comparative Example 1 was used as control (4.2V-battery).

The battery according to Example 2 was tested in a charge/discharge voltage range of between 3V and 4.35V, the battery according to Example 3 was tested in a range of between 3V and 4.4V, the battery according to Example 4 was tested in a range of between 3V and 4.5V, and the battery according to Comparative Example 1 was tested in a range of between 3V and 4.2V, each battery being subjected to cycling under 1C charge/1C discharge conditions. The test were performed at room temperature (25°C).

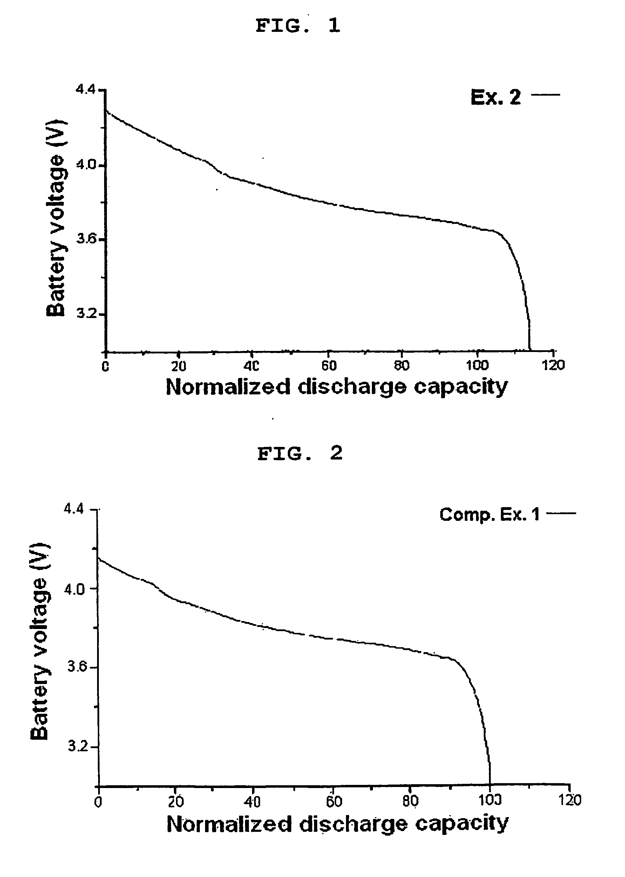

After the experiment, the 4.2V battery according to Comparative Example 1 showed an initial charge capacity and discharge capacity of 155.0 mAh/g and 149.4 mAh/g, respectively. The battery had an energy density per unit volume of battery of 380.0 Wh/kg (see, FIG. 2 and Table 2). On the contrary, the 4.35V-battery according to Example 2 showed an initial charge capacity and discharge capacity of 179.7 mAh/g and 171.3 mAh/g, respectively, and had an energy density per unit volume of battery of 439.2 Wh/kg, resulting in improvements in terms of discharge capacity and energy density per unit volume of battery by 14.6% and 15.6%, respectively (sea, FIG. 1 and Table 2). Additionally, the 4.4V-battery and 45V-battery according to Examples 3 and 4 showed an increase in discharge capacity of 20% and 30%, respectively, compared to the 4.2V-battery according to Comparative example 1 as control. Further, the batteries according to Examples 3 and 4 showed an increase in energy density per unit volume of 22.3% and 33.4%, respectively (see, Table 2).

As can be seen from the above results, even if the lithium secondary according to the present invention uses the same cathode active material (LiCoO₂) that is used in a conventional battery, it increases the available capacity of LiCoO₂ by at least 14% and improves the energy density per unit volume significantly through the modification in the electrode design.

**[Table 2]**

| | Comp. Ex. 1 | Ex. 2 | Ex. 3 | Ex. 4 |
|---|---|---|---|---|
| Charge-cutoff Voltage(V) | 4.2 | 4.35 | 4.4 | 4.5 |
| Initial charge capacity (mAh/g) | 155.0 | 179.7 | 188.9 | 208.4 |
| Initial discharge capacity (mAh/g) | 149.4 | 171.3 | 179.1 | 194.7 |
| Efficiency (%) | 96.4 | 95.3 | 94.8 | 93.4 |
| Increase in capacity(%) | 100 | 114 | 120 | 130 |
| Increase in energy density per unit volume(%) | 100 | 115.6 | 122.3 | 133.4 |

### 1-2. Evaluation for safety

The following overcharge test was performed for the lithium secondary battery having charge-cutoff voltages over 4.35V according to the present invention and the battery having a charge-cutoff voltage of 4.2V.

The battery according to Example 2 was used as sample for a battery having a charge-cutoff voltage of 4.35V or higher and the battery according to Comparative Example 1 was used as control (4.2V-battery). Each battery was subjected to the overcharge test under an overcharge voltage of 5.0V with an electric current of 2A at room temperature (25°C).

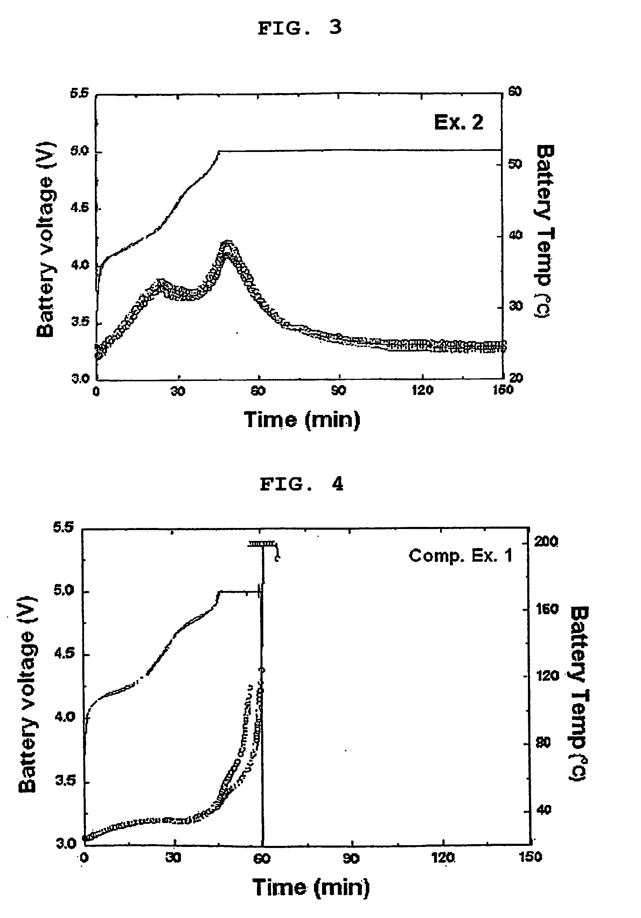

After the experiment, the temperature of 4.2V-battery according to Comparative Example 1 increased to 200°C after the lapse of 1 hour and exploded due to short-circuit in the battery (see, FIG. 4). This indicates that when the conventional 4.2V-battery was overcharged to 5.0V, reactivity between the cathode and electrolyte increases to cause the decomposition of the cathode surface and oxidation of the electrolyte, and lithium dendrite growth occurs due to the lack of anode sites, into which an excessive amount of lithium ions deintercalated from the cathode upon overcharge is intercalated, resulting in a significant drop in electrochemical stability of the battery.

On the contrary, when the battery having a charge-cutoff voltage of 4.35V according to the present invention was overcharged to 5.0V, the battery temperature increased to 40°C. However, the temperature was stabilized with time (see, FIG. 3). This indicates that the battery according to the present invention has a large amount of anode sites, into which an excessive amount of lithium ions deintercalated from the cathode upon overcharge can be intercalated, and shows a significant decrease in side reactions between the cathode and electrolyte due to an increased reactivity between them caused by overcharge.

As can be seen from the foregoing, the lithium secondary battery according to the present invention has significantly improved overcharge safety, because it has a controlled weight ratio (A/C) of anode active material (A) to cathode active material (C) per unit area of each electrode, contrary to the conventional 4.2V battery.

### Experimental Example 2. Evaluation for cycle characteristics of high-voltage lithium secondary battery having charge-cutoff voltages over 4.35V

The high-voltage lithium secondary battery having charge-cutoff voltages over 4.35V according to the present invention was evaluated for cycle characteristics as follows.

The lithium secondary battery using no additive for electrolyte according to Example 1 and the lithium secondary battery using 3-fluorotoluene (3-FT) as additive for electrolyte according to Example 5 were used as samples for batteries having charge-cutoff voltages over 4.35V. As controls, the battery using CHB as additive for electrolyte according to Comparative Example 2 and the battery using 4-fluorotoluene (4-FT) as additive for electrolyte according to Comparative Example 3 were used.

Each battery was tested in a charge/discharge voltage range of between 3.0V and 4.35V and was subjected to cycling under a charge/discharge current of 1C (= 880 mA). At the zone of 4.35V constant voltage, the voltage was maintained at 4.35V until the current dropped to 50 mA and the test was performed at 45°C.

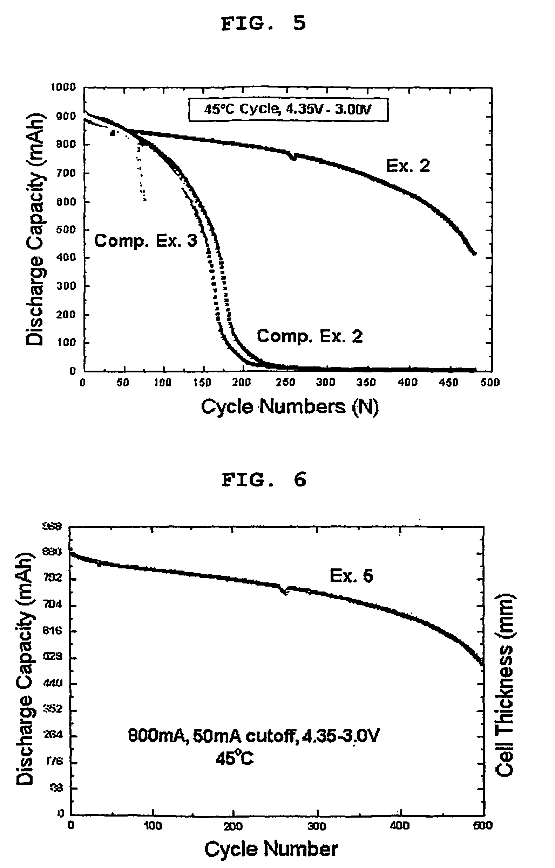

After the experiment, the lithium secondary battery using the electrolyte containing CHB as additive showed significant degradation in cycle characteristics under high temperature conditions, as compared to the lithium secondary battery using no additive for electrolyte according to Example 1 and the lithium secondary battery using the electrolyte containing 3-fluorotoluene (3-FT) as additive according to Example 5 (see, FIG. 5). This indicates that because CHB having a reaction potential of less than 4.7V experiences electropolymerization to form a coating layer, charge transfer reaction of the cathode active material is inhibited and resistance is increased at the cathode, resulting in degradation in cycle characteristics of the battery. Additionally, the battery using 4-fluorotoluene having a reaction potential similar to that of CHB according to Comparative Example 3 showed a rapid drop in cycle characteristics, because the cathode active material may react with the fluorine atom present at the para-position of 4-FT during cycles under 4.35V (see, FIG. 5).

On the contrary, the lithium secondary battery using 3-fluorotoluene (3-FT) having a reaction potential of higher than 4.7V as additive for electrolyte according to Example 5 did not show any significant change in high-temperature cycle characteristics, as can be seen from FIG. 5 (see, FIG. 6).

Therefore, it can be seen that the high-voltage lithium secondary battery using a compound having a reaction potential higher than 4.7 V (for example, 3-fluorotoluene (3-FT)) as additive for electrolyte according to the present invention can prevent degradation in high-temperature cycle characteristics, contrary to a 4.2V-battery using CHB as additive for electrolyte.

### Experimental Example 3. Evaluation for safety of high-voltage lithium secondary having charge-cutoff voltages over 4.35V

The following hot box test was performed in order to evaluate the safety of the high-voltage lithium secondary having charge-cutoff voltages over 4.35V according to the present invention.

The high-voltage lithium secondary battery using 3-fluorotoluene as additive for electrolyte according to Example 5 was used as sample. As controls, the lithium secondary batteries using CHB and 4-fluorotoluene (4-FT) as additives for electrolyte according to Comparative Examples 2 and 3, respectively, were used.

Each battery was charged to 4.4V under 1C (=880 mA) for 2.5 hours and then maintained under the constant voltage condition. Then, each battery was introduced into an oven capable of convection, warmed from room temperature to a high temperature of 150°C at a rate of 5°C/min., and exposed to such high-temperature condition for 1 hour. Additionally, each battery was checked for explosion.

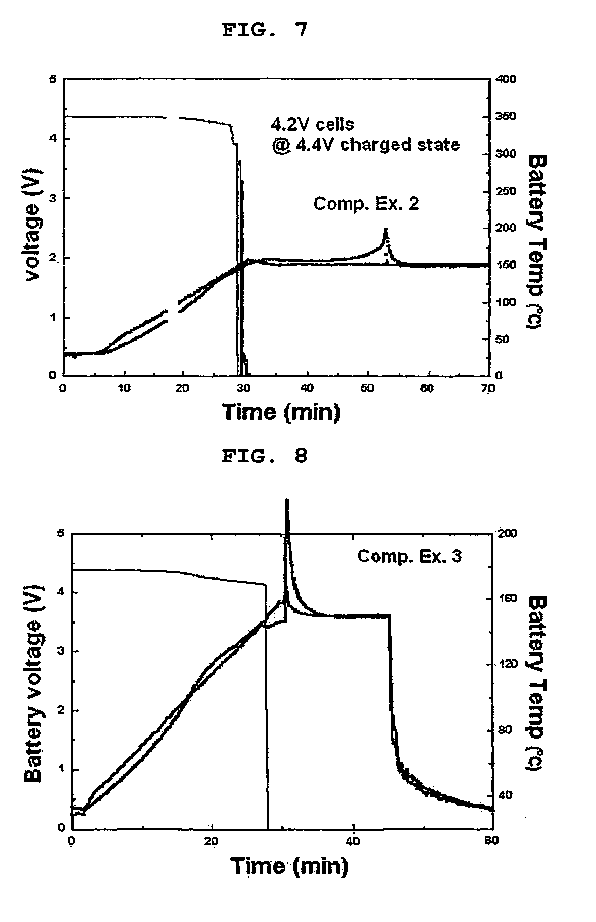

After the experiment, the batteries using CHB and 4-FT as additive for electrolyte, respectively, according to Comparative Example 2 and Comparative Example 3 exploded with time (see, FIGs. 7 and 8). On the contrary, the lithium secondary battery using 3-fluorotoluene as additive for electrolyte according to Example 5 showed a stable state even at a high temperature of 150°C (see, FIG. 9).

### Experimental Example 4. Evaluation for high-temperature storage characteristics of high-voltage lithium secondary battery having charge-cutoff voltages over 4.35V

The high-voltage lithium secondary battery having charge-cutoff voltages over 4.35V was evaluated in the following high-temperature storage tests.

### 4-1. Long-term high-temperature storage test

The lithium secondary battery using 3-fluorotoluene as additive for electrolyte was used as sample. As controls, the batteries using CHB and 4-FT as additives for electrolyte, respectively, according to Comparative Example 2 and Comparative Example 3 were used.

Each battery was charged at a charging current of 1C to 4.35V and discharged at 1C to 3V to determine the initial discharge capacity. Next, each battery was recharged to 4.35V and was subjected to repeated 30 cycles of 3-hour storage at 80°C/7-hour storage at 25°C. During such cycles, the thickness of each battery was measured. Then, each battery was discharged at 1C to determine the residual capacity of each battery. After measuring the residual capacity, each battery was subjected to three charge/discharge cycles and measured for the recovery capacity. In order to ensure reproducibility, the above-described procedure was repeated 4 times.

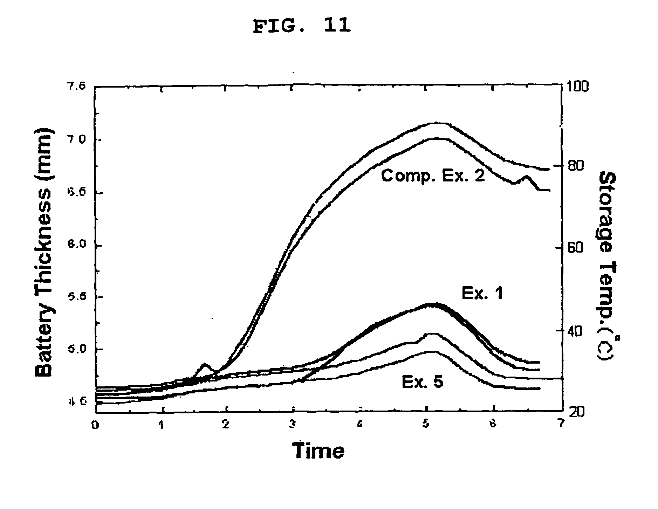

After the experiment, the battery comprising CHB according to Comparative Example 2 showed a significant swelling phenomenon before the fifth charge/discharge cycle (see, FIG. 10). Additionally, the battery using 4-fluorotoluene whose reaction potential is similar to that of CHB also showed a significant swelling phenomenon after approximately 10 charge/discharge cycles (see, FIG. 11). On the contrary, the battery using 3-fluorotoluene according to Example 5 showed a significant drop in the battery swelling phenomenon (see, FIG. 10).

### 4-2. Short-term high-temperature storage test

The lithium secondary battery using no additive for electrolyte according to Example 1 and the lithium secondary battery using 3-fluorotoluene as additive for electrolyte according to Example 5 were used as samples. As controls, the batteries using CHB and 4-FT as additives for electrolyte, respectively, according to Comparative Example 2 and Comparative Example 3 were used.

Each battery was charged at a charging current of 1C to 4.35V and discharged at 1C to 3V to determine the initial discharge capacity. Next, each battery was recharged to 4.35V and was stored at 90°C for 4 hours, during which the thickness of each battery was measured. Then, each battery was discharged at 1C to determine the residual capacity of each battery. After measuring the residual capacity, each battery was subjected to three charge/discharge cycles and measured for the recovery capacity.

After the storage at 90°C for 4 hours, the battery having a charge-cutoff voltage of 4.35V or higher according to Comparative Example 2 showed a significant increase in its thickness, particularly compared to the battery using no additive for electrolyte according to Example 1 (see, FIG. 11). This indicates that the electrolyte is decomposed due to the increase in reactivity between the cathode and electrolyte to form a thick insulator film, resulting in an increase in the battery thickness. Therefore, it can be seen that a conventional additive (for example, CHB) for a 4.2V battery is not suitable for a high-voltage battery having a charge-cutoff voltage of 4.35V or higher.

On the contrary, the high-voltage lithium secondary battery having charge-cutoff voltages over 4.35V and using 3-fluorotoluene as additive for electrolyte according to Example 5 did not show a swelling phenomenon even after the storage at 90°C. This indicates that the battery shows little degradation in the battery quality (see, FIG. 11).

Therefore, it can be seen that a fluorotoluene compound having a reaction potential of 4.7V or higher (for example, 2-fluotoluene and 3-fluorotoluene) is suitable for an additive for electrolyte in the high-voltage battery having a charge-cutoff voltage of 4.35V or higher according to the present invention.

### Industrial Applicability

As can be seen from the foregoing, the high-voltage lithium secondary battery according to claim 1 satisfies capacity balance by controlling the weight ratio (A/C) of anode active material (A) to cathode active material (C) per unit area of each electrode. By doing so, it is possible to increase the available capacity of cathode active material significantly by at least 14%, as compared to the available capacity of cathode active material in a conventional battery of merely about 50%. Therefore, the battery according to claim 1 can solve the problems occurring in 4.2V-batteries according to the prior art upon overcharge, and thus can provide a high-voltage lithium secondary battery having excellent safety and long service life.

Further, when a fluorotoluene compound having a reaction potential of 4.7V or higher is used as additive for electrolyte in a high-voltage battery having a charge-cutoff voltage of 4.35V or higher, it is possible to improve the safety and high-temperature storage characteristics of the battery with no degradation in cycle characteristics.

## Claims

1. A lithium secondary battery comprising
(i) a cathode (C) in which cathode active materials with a particle size in the range of 5 to 30 µm are loaded in an amount of between 10mg/cm² and 30 mg/cm²;
(ii) an anode (A) in which anode active materials are loaded in an amount of between 4.4 mg/cm² and 21 mg/cm²;
(iii) a separator; and
(iv) an electrolyte,
wherein the battery has a weight ratio (A/C) of anode active material (A) to cathode active material (C) per unit area of each electrode of between 0.44 and 0.7, and a ratio (A/C) of thickness of the cathode (C) to that of the anode (A) of between 0.7 and 1.4, and
the electrolyte further comprises at least one fluorotoluene compound selected from the group consisting of 2-fluorotoluene and 3-fluorotoluene.

2. The lithium secondary battery according to claim 1, wherein the cathode (C) is obtained from a cathode active material capable of lithium intercalation /deintercalation, the cathode active material being doped with at least one metal selected from the group consisting of Al, Mg, Zr, Fe, Zn, Ga, Sn, Si and Ge.

3. The lithium secondary battery according to claim 1, wherein the cathode active material is a lithium-containing composite oxide having at least one element selected from the group consisting of alkali metals, alkaline earth metals, Group 13 elements, Group 14 elements, Group 15 element, transition metals and rare earth elements.

4. The lithium secondary battery according to claim 1, wherein the compound is used in an amount of between 0.1 and 10 wt% based on 100 wt% of the electrolyte.

## Patentansprüche

1. Lithium-Akku mit:
(i) einer Kathode (C), in der Kathoden-Aktivmaterialien mit einer Teilchengröße im Bereich von 5 bis 50 µm in einer Menge zwischen 10 mg/cm² und 30 mg/cm² eingelagert sind;
(ii) einer Anode (C), in der Anoden-Aktivmaterialien in einer Menge zwischen 4,4 mg/cm² und 21 mg/cm² eingelagert sind;
(iii) einem Separator; und
(iv) einem Elektrolyt,
wobei der Akku ein Gewichtsverhältnis (A/C) zwischen dem Anoden-Aktivmaterial (A) und dem Kathoden-Aktivmaterial (C) pro Flächeneinheit jeder Elektrode zwischen 0,44 und 0,7 und ein Verhältnis (A/C) zwischen der Dicke der Kathode (C) und derjenigen der Anode (A) zwischen 0,7 und 1,4 aufweist, und
wobei der Elektrolyt ferner mindestens eine aus 2-Fluortoluol und 3-Fluortoluol ausgewählte Fluortoluolverbindung enthält.

2. Lithium-Akku nach Anspruch 1, wobei die Kathode (C) von einem Kathoden-Aktivmaterial erhalten wird, das für eine Lithium-Ein-/Auslagerung geeignet ist, wobei das Kathoden-Aktivmaterial mit mindestens einem aus Al, Mg, Zr, Fe, Zn, Ga, Sn, Si und Ge ausgewählten Metall dotiert ist.

3. Lithium-Akku nach Anspruch 1, wobei das Kathoden-Aktivmaterial ein Lithium enthaltendes Mischoxid ist, das mindestens ein aus Alkalimetallen, Erdalkalimetallen, Elementen der Gruppe 13, Elementen der Gruppe 14, Elementen der Gruppe 15, Übergangsmetallen und Seltenerdmetallen ausgewähltes Element aufweist.

4. Lithium-Akku nach Anspruch 1, wobei die Verbindung in einer Menge zwischen 0,1 und 10 Gew.-% basierend auf 100 Gew.-% des Elektrolyten verwendet wird.

## Revendications

1. Accumulateur au lithium, comprenant :
(i) une cathode (C) dans laquelle des matériaux actifs de cathode ayant une taille de particule située dans la plage allant de 5 µm à 30 µm sont chargés en une quantité située entre 10 mg/cm² et 30 mg/cm² ;
(ii) une anode (A) dans laquelle des matériaux actifs d'anode sont chargés en une quantité située entre 4,4 mg/cm² et 21 mg/cm² ;
(iii) un séparateur, et
(iv) un électrolyte,
dans lequel l'accumulateur présente un rapport pondéral (A/C) entre le matériau actif d'anode (A) et le matériau actif de cathode (C) par unité de surface de chaque électrode situé entre 0,44 et 0,7, et un rapport (A/C) entre l'épaisseur de la cathode (C) et l'épaisseur de l'anode (A) situé entre 0,7 et 1,4, et
l'électrolyte comprend en outre au moins un composé de toluène fluoré choisi dans le groupe constitué par le 2-fluorotoluène et le 3-fluorotoluène.

2. Accumulateur au lithium selon la revendication 1, dans lequel la cathode (C) est obtenue à partir d'un matériau actif de cathode apte à intercaler/désintercaler le lithium, le matériau actif de cathode étant dopé avec au moins un métal choisi dans le groupe constitué par Al, Mg, Zr, Fe, Zn, Ga, Sn, Si et Ge.

3. Accumulateur au lithium selon la revendication 1, dans lequel le matériau actif de cathode est un oxyde composite contenant du lithium ayant au moins un élément choisi dans le groupe constitué par les métaux alcalins, les métaux alcalino-terreux, les éléments du groupe 13, les éléments du groupe 14, les éléments du groupe 15, les métaux de transition et les lanthanides.

4. Accumulateur au lithium selon la revendication 1, dans lequel le composé est utilisé en une quantité située entre 0,1 % en poids et 10 % en poids, sur la base de 100 % en poids de l'électrolyte.
